# EUROPEAN PATENT APPLICATION

(11) **EP 1 441 338 A2**
(43) Date of publication of application: **28.07.2004**
(21) Application number: 04001116.5
(22) Date of filing: 20.01.2004
(51) Int. Cl.: G11B 19/22

(54) **Method and apparatus for stopping the rotation of a disc in disc device**

(30) Priority: 24.01.2003 KR 2003004928
(71) Applicant: LG ELECTRONICS INC., Seoul 150-010 (KR)
(72) Inventor: Yoo, Seung Ho, Sooji-eup, Kyungin-si,Kyunggi-do 449-845 (KR)
(74) Representative: VOSSIUS & PARTNER

(57) **Abstract**

A method and apparatus are provided for controlling stop of a disc in a disc device. In accordance with the method and apparatus, a brake voltage application time for a disc stop is calculated with reference to brake voltage application times by reproduction positions of the disc and brake voltage application times by rotational velocity reduction ratios of the disc, and a brake voltage is applied to a drive unit for the calculated time, such that the disc being rotated can be accurately stopped. Accordingly, it is possible to efficiently prevent an error from occurring in a disc stop control operation due to a weight or external temperature variation of the disc.

## Description

The invention relates to a method and apparatus for controlling the stop of a disc in a disc device.

Recently, an optical disc capable of storing long-term high-quality video data and long-term high-quality audio data, such as a DVD, has been developed, introduced to the market, and made commercially available. An optical disc device capable of reproducing or recording video and audio data from/on a DVD, such as a DVD player or DVD recorder, has also been developed, introduced to the market, and made commercially available.

Such an optical disc device, for example, a DVD player, is adapted to read a data stream recorded on, for example, a DVD, decode and restore the read data stream into the original video and audio signals, digital/analog (D/A)-convert the restored video and audio signals, and output the resulting video and audio signals through, for example, a general television receiver, respectively, as picture and sound. As a result, a user can watch and listen to the video and audio recorded on the DVD through, for example, a general television receiver.

The above-mentioned optical disc device performs a spindle servo control operation. That is, if an optical disc is loaded in the device, then a spindle motor is driven to rotate the optical disc at high speed. Thereafter, if stop of a reproduction operation is requested, then a brake voltage is applied to the spindle motor for a predetermined period of time to stop rotation of the optical disc.

However, the aforementioned optical disc device has a disadvantage in that, when a weight or external temperature variation of an optical disc loaded in the device is beyond a predetermined range of allowable error, an error occurs in the spindle servo control operation, thereby making it impossible to accurately stop rotation of the optical disc.

An object of the invention is to substantially solve at least one or more of the above problems and/or disadvantages in whole or in part and to provide at least the advantages described hereinafter.

In order to achieve at least the above objects in whole or in part and in accordance with the purpose of the invention, as embodied and broadly described, there is provided a method for controlling stop of a disc in a disc device comprising rotating a disc, detecting a rotational velocity reduction ratio, calculating a brake voltage application time with reference to said detected disc rotational velocity and disc rotational velocity reduction ratio, and braking said disc based on said calculated brake voltage application time.

To further achieve at least the above objects in whole or in part and in accordance with the purpose of the invention, as embodied and broadly described, there is provided an apparatus for controlling stop of a disc in a disc device comprising means for rotating a disc, means for detecting a rotational velocity of said disc, means for reducing a rotational velocity of said disc, means for detecting a rotational velocity reduction ratio of said disc based on the velocity reduction, means for calculating a brake voltage application time with reference to said detected disc rotational velocity and disc rotational velocity reduction ratio, and means for braking said disc based on said calculated brake voltage application time.

To further achieve at least the above objects in whole or in part and in accordance with the purpose of the invention, as embodied and broadly described, there is provided a disc device comprising a drive unit configured to rotate a disc, and a servo controller configured to detect a rotational velocity of said disc, provide a signal to said drive unit to reduce a rotational velocity of said disc, detect a rotational velocity reduction ratio of said disc based on the velocity reduction, calculate a brake voltage application time with reference to said detected disc rotational velocity and disc rotational velocity reduction ratio, and provide a signal to said drive unit to brake said disc based on said calculated brake voltage application time.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

The invention will be described in detail with reference to the following drawings in which like reference numerals refer to like elements wherein:

Fig. 1 is a schematic block diagram of an optical disc device in which a method for controlling stop of an optical disc according to an embodiment of the invention is applied;

Fig. 2 is a graph illustrating brake voltage application times by reproduction positions of the disc according to an embodiment of the invention;

Fig. 3 is a graph illustrating brake voltage application times for rotational velocity reduction ratios of a disc according to an embodiment of the invention; and

Fig. 4 is a flow chart illustrating a method for controlling disc stop in an optical disc device according to an embodiment of the invention.

A method and apparatus for controlling stop of a disc in a disc device according to an embodiment of the invention will be described with reference to the attached drawings. The following description is directed to an optical disc apparatus. However, it is understood the method and apparatus according to the invention may be applicable to any type apparatus in which it is desirable to accurately stop rotation of a disc.

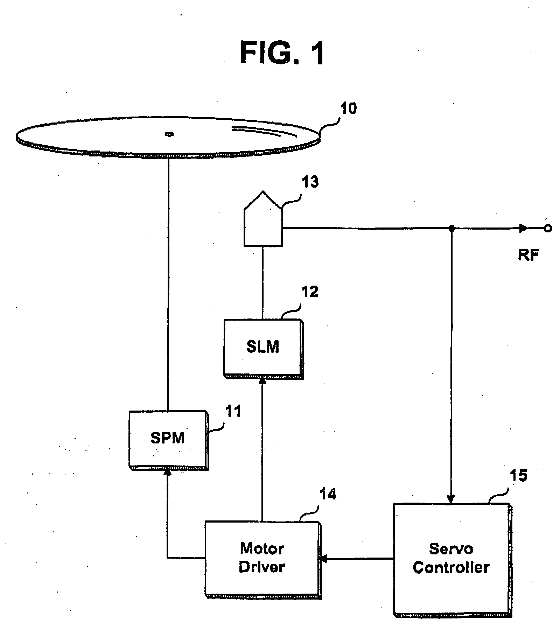

Fig. 1 is a schematic block diagram of an optical disc device in which a method for controlling stop of an optical disc according to an embodiment of the invention is applied. As shown in Fig. 1, an optical disc device 1, for example, a DVD player, comprises a drive unit comprising a spindle motor (SPM) 11 and a sled motor 12, and a motor driver 14, as well as an optical pickup 13 and a servo controller 15.

The spindle motor 11 is driven by a drive voltage from the motor driver 14 to rotate, at high speed, an optical disc 10 loaded in the optical disc device 1. The sled motor 12 is driven by a drive voltage from the motor driver 14 to move the optical pickup 13 horizontally parallel to a recording surface of the optical disc 10.

The servo controller 15 is configured to perform a spindle servo control operation of, in response to, for example, a focus error signal, tracking error signal, and radio frequency (RF) signal from a photo detector included in the optical pickup 13, driving of the spindle motor 11 and sled motor 12, and stopping the optical disc 10 being rotated at high speed by the spindle motor 11.

The servo controller 15 is also configured to detect a rotational velocity of the optical disc 10 with reference, for example, to information regarding a position of the disc currently being reproduced or a position of the pickup head with respect to the disc currently being reproduced. For example, the servo controller 15 detects a higher rotational velocity of the spindle motor 11 when the pickup head is positioned adjacent to an inner periphery of the disc, an intermediate rotational velocity when the pickup head is positioned adjacent to a middle portion of the disc, and a lower rotational velocity when the pickup head is positioned adjacent to an outer periphery of the disc.

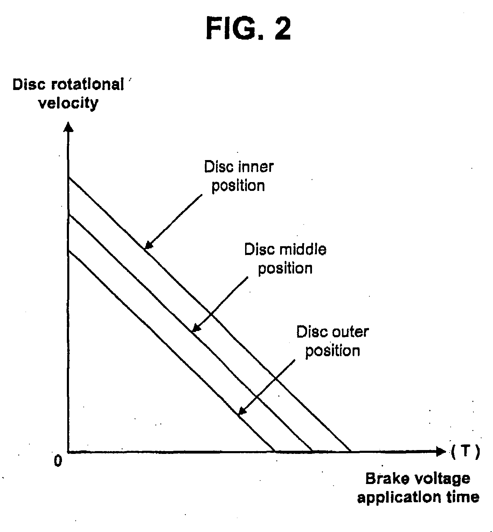

The servo controller 15 is also configured to apply a constant brake voltage to the spindle motor 11 to stop the disc rotation. As shown in Fig. 2, the brake voltage is applied for a longer period of time to stop the disc when the rotational velocity of the optical disc 10 is higher, for example, when the pickup head is positioned near an inner periphery of the disc, for an intermediate period of time to stop the disc, when the rotational velocity of the disc is at an intermediate speed, for example, when the pickup head is positioned adjacent a middle portion of the disc, and for a shorter period of time to stop the disc when the rotational velocity of the disc is lower, for example, when the pickup head is positioned, adjacent an outer periphery of the disc.

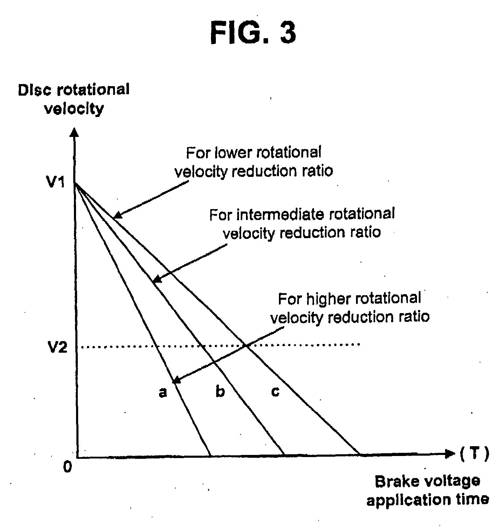

The servo controller 15 is also configured to, if a disc stop mode is set, reduce a current rotational velocity V1 of the spindle motor 11 to a desired rotational velocity V2 and then detect a rotational velocity reduction ratio a, b, or c of the optical disc 10 based on the reduced rotational velocity. For example, as shown in Fig. 3, in the case where the optical disc 10 is heavier in weight than a standard optical disc, the rotational velocity reduction ratio is lower because the inertia of the disc 10 is greater. If the optical disc 10 is similar in weight to a standard optical disc, the rotational velocity reduction ratio is intermediate. Where the optical disc 10 is lighter in weight than a standard optical disc, the rotational velocity reduction ratio is higher because the inertia of the disc 10 is smaller.

Therefore, if the disc stop mode is set, the servo controller 15 detects a disc rotational velocity and a disc rotational velocity reduction ratio, calculates a brake voltage application time with reference to the detected rotational velocity and rotational velocity reduction ratio and applies the brake voltage to the spindle motor 11 for the calculated time, as will hereinafter be described in detail.

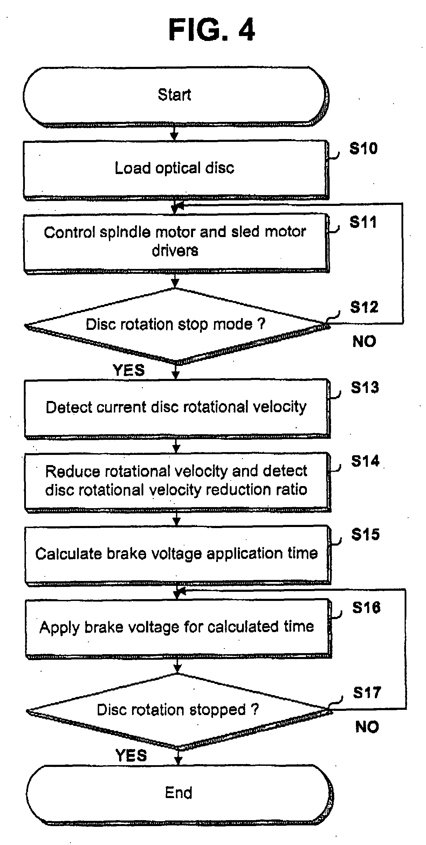

Fig. 4 is a flow chart illustrating a method for controlling the disc stop in an optical disc device according to an embodiment of the invention. If the optical disc 10 is loaded in an optical disc device, for example, a DVD player, in step S10, the servo controller 15 performs an initial servo operation, in step S11. In this servo operation, the servo controller 15 controls the motor driver 14 to apply a drive voltage to the spindle motor 11 so as to rotate the optical disc 10 at a high speed. The servo controller 15 also applies a drive voltage to the sled motor 12 to move the optical pickup 13 horizontally parallel to a recording surface of the optical disc 10.

If a reproduction stop request is received from the user in the middle of performing a data reproduction operation of reading/reproducing audio/video (A/V) data recorded on the optical disc 10, the servo controller 15 initiates a disc rotation stop mode, in step S12. Then, as stated previously with reference to Fig. 2, the servo controller 15 detects a rotational velocity of the optical disc 10 referring, for example, to information regarding a position of the disc currently being reproduced, for example, sector number information of data position being currently reproduced if the disc is, for example, a DVD and time MSF information of a data position being currently reproduced if the disc is, for example, a CD, in step S13.

As stated previously with reference to Fig. 3, the servo controller 15 also reduces a rotational velocity of the spindle motor 11 to a desired rotational velocity and then detects a rotational velocity reduction ratio of the optical disc 10 based on the reduced rotational velocity, in step S14. The reduction ratio is obtained by dividing the difference between a disc rotational velocity after the reduction and a disc rotational velocity before the reduction by a period of time required for the reduction, for example, one second.

The servo controller 15 then calculates a brake voltage application time with reference to the disc rotational velocity and disc rotational velocity reduction ratio detected in the above manner, in step S15, and applies a brake voltage to the spindle motor 11 for the calculated time, in step S16. The brake voltage application time is in proportion to the rotational velocity of the disc and in inverse proportion to the rotational velocity reduction ratio of the disc.

Thereafter, the servo controller 15 continuously monitors whether the disc 10 is stopped while applying the brake voltage to the spindle motor 11, in step S17. If the disc is stopped earlier than expiration of the brake voltage application time, then the servo controller 15 stops the application of the brake voltage.

As is apparent from the above description, the invention provides a method and apparatus for controlling stop of a disc in a disc device, which is capable of efficiently preventing an error from occurring in a disc stop control operation due to a weight or external temperature variation of the disc. Further, the method and apparatus according to embodiments of the invention are capable of more accurately stopping a disc being rotated by a spindle motor.

The foregoing embodiments and advantages are merely exemplary and are not to be construed as limiting the invention. The present teaching can be readily applied to other types of apparatuses. The description of the invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. A method for controlling stop of a disc in a disc device, comprising:
rotating a disc;
detecting a rotational velocity of said disc;
reducing a rotational velocity of said disc;
detecting a rotational velocity reduction ratio of said disc based on the velocity reduction;
calculating a brake voltage application time with reference to said detected disc rotational velocity and disc rotational velocity reduction ratio; and
braking said disc based on said calculated brake voltage application time.

2. The method as set forth in claim 1, wherein the disc comprises an optical disc and the disc device comprises an optical disc device.

3. The method as set forth in claim 2, wherein the optical disc device comprises an optical disc reproduction device.

4. The method as set forth in claim 1, 2 or 3, wherein rotating a disc comprises rotating a disc using a spindle motor.

5. The method as set forth in claim 4, wherein braking said disc based on said calculated brake voltage application time comprises applying a brake voltage to said spindle motor for said calculated brake voltage application time to stop the disc.

6. The method as set forth in any of claims 1 to 5, wherein detecting a rotational velocity of said disc comprises detecting said rotational velocity of said disc based upon information regarding a position of said disc.

7. The method as set forth in any of claims 1 to 6, wherein detecting a rotational velocity reduction ratio of said disc based on the velocity reduction comprises detecting said rotation velocity reduction ratio of said disc based upon a reduced rotational velocity of said disc after the lapse of a predetermined period of time from a start point time of said velocity reduction.

8. The method as set forth in claim 7, wherein said rotational velocity reduction ratio of said disc is detected based upon of a period of time required until a current rotational velocity of said disc is reduced to a predetermined rotational velocity.

9. The method as set forth in any of claims 1 to 8, wherein said brake voltage application time is in proportion to said rotational velocity of said disc and in inverse proportion to said rotational velocity reduction ratio of said disc.

10. Apparatus for controlling stop of a disc in a disc device, comprising:
means for rotating a disc;
means for detecting a rotational velocity of said disc;
means for reducing a rotational velocity of said disc;
means for detecting a rotational velocity reduction ratio of said disc based on the velocity reduction;
means for calculating a brake voltage application time with reference to said detected disc rotational velocity and disc rotational velocity reduction ratio; and
means for braking said disc based on said calculated brake voltage application time.

11. The apparatus as set forth in claim 10, wherein the disc comprises an optical disc and the disc device comprises an optical disc device.

12. The apparatus as set forth in claim 11, wherein the optical disc device comprises an optical disc reproduction device.

13. The apparatus as set forth in claim 10, 11 or 12, wherein the means for rotating a disc comprises a spindle motor.

14. The apparatus as set forth in claim 13, wherein means for braking said disc based on said calculated brake voltage application time comprises means for applying a brake voltage to said spindle motor for said calculated brake voltage application time to stop the disc.

15. The apparatus as set forth in any of claims 10 to 14, wherein the means for detecting a rotational velocity of said disc comprises means for detecting said rotational velocity of said disc based upon information regarding a position of said disc.

16. The apparatus as set forth in any of claims 10 to 15, wherein the means for detecting a rotational velocity reduction ratio of said disc based on the velocity reduction comprises means for detecting said rotation velocity reduction ratio of said disc based upon a reduced rotational velocity of said disc after the lapse of a predetermined period of time from a start point time of said velocity reduction.

17. The apparatus as set forth in claim 16, wherein said rotational velocity reduction ratio of said disc is detected based upon of a period of time required until a current rotational velocity of said disc is reduced to a predetermined rotational velocity.

18. The apparatus as set forth in any of claims 10 to 17, wherein said brake voltage application time is in proportion to said rotational velocity of said disc and in inverse proportion to said rotational velocity reduction ratio of said disc.

19. A disc device, comprising:
a drive unit configured to rotate a disc; and
a servo controller configured to detect a rotational velocity of said disc, provide a signal to said drive unit to reduce a rotational velocity of said disc, detect a rotational velocity reduction ratio of said disc based on the velocity reduction, calculate a brake voltage application time with reference to said detected disc rotational velocity and disc rotational velocity reduction ratio, and provide a signal to said drive unit to brake said disc based on said calculated brake voltage application time.

20. The disc device as set forth in claim 19, wherein the disc comprises an optical disc and the disc device comprises an optical disc device.

21. The disc device as set forth in claim 20, wherein the optical disc device comprises an optical disc reproduction device.

22. The disc device as set forth in claim 19, 20 or 21, wherein the drive unit comprises a spindle motor.

23. The disc device as set forth in any of claims 19 to 22, wherein the servo controller detects said rotational velocity of said disc based upon information regarding a position of said disc.

24. The disc device as set forth in any of claims 19 to 23, wherein said servo controller detects said rotation velocity reduction ratio of said disc based upon a reduced rotational velocity of said disc after the lapse of a predetermined period of time from a start point time of said velocity reduction.

25. The disc device as set forth in any of claims 19 to 24, wherein said rotational velocity reduction ratio of said disc is detected based upon of a period of time required until a current rotational velocity of said disc is reduced to a predetermined rotational velocity.

26. The disc device as set forth in any of claims 19 to 25, wherein said brake voltage application time is in proportion to said rotational velocity of said disc and in inverse proportion to said rotational velocity reduction ratio of said disc.
